# EUROPÄISCHE PATENTSCHRIFT

(11) **EP 3 153 812 B1**
(45) Veröffentlichungstag und Bekanntmachung des Hinweises auf die Patenterteilung: **22.05.2019**
(21) Anmeldenummer: 16002164.8
(22) Anmeldetag: 07.10.2016
(51) Int. Cl.: F42C 11/00, F42C 15/295

(54) **WINDRAD, ANTRIEB UND ZÜNDER**
WIND WHEEL, DRIVE AND IGNITER
ROUE ÉOLIENNE, ENTRAÎNEMENT ET FUSÉE

(30) Priorität: 07.10.2015 DE 102015012977
(43) Veröffentlichungstag der Anmeldung: 12.04.2017
(73) Patentinhaber: JUNGHANS Microtec GmbH, 78655 Dunningen-Seedorf (DE)
(72) Erfinder: Fürst, Boris-Johannes, 72406 Bisingen Thanheim (DE); Werner, Matthias, 78655 Dunningen-Seedorf (DE); Zehnder, Wolfgang, 78713 Schramberg (DE)
(74) Vertreter: Diehl Patentabteilung

(56) Entgegenhaltungen:
- DE-A1- 3 126 288
- US-A- 1 793 567
- US-B1- 6 465 902

## Beschreibung

Die Erfindung betrifft ein Windrad für einen Antrieb einer Entsicherungseinheit eines Zünders für Munition oder für einen Antrieb eines elektrischen Generators eines Zünders für Munition.

Prinzipiell besteht der Wunsch, im Falle von nicht drallender Munition ein zweites Entsicherungskriterium für einen Zünder zu schaffen oder eine Möglichkeit der Energiegewinnung zur Energieversorgung von Zündern auf nicht drallender Munition zu schaffen. Hierzu ist z. B. ein Windrad als Antrieb von Entsicherungseinheiten in Zündern aus der GB 191104064 A bekannt. Bei dem in der DE 31 26 288 A1 beschriebenen Geschosszünder sorgt ebenfalls ein Windrad für eine Entsicherung einer Entriegelungseinrichtung, wobei dem Windrad über Luftströmungs-Leitkanäle Luft zugeführt wird. Die US 1 793 567 A setzt zur Freigabe eines Schlagbolzens in einem Zünder ein im Inneren des Zündergehäuses befindliches Flügelrad ein. Über ein an der Oberseite des Zündergehäuses befindliches, mit Kanälen versehenes Schlagmittel strömt während des Flugs des Zünders Luft in das Innere des Zündergehäuses und treibt dadurch das Flügelrad an.

Um die Form von Flügeln eines Windrades zur Energieerzeugung in Abhängigkeit von der Geschwindigkeit der Strömung zu verändern, wird in der US 6 465 902 B1 vorgeschlagen, in die Flügel Elemente aus einer Formgedächtnislegierung einzubetten.

Wird diese Aufgabe mit einem Windrad gelöst, kann dies in beiden Fällen zu Problemen führen. Beispielsweise können die aerodynamischen Einflüsse eines Windrades an der Zünderspitze oder im Aufbau des Kopfstrukturteils des Geschosses zur Strömungsbeeinflussung und über die Gesamtflugstrecke zur Verminderung der Reichweite bzw. zur Ablage des Geschosses führen. Ein Wunsch besteht demnach darin, dass das Windrad somit möglichst frei von Flugbahnbeeinflussungen sein soll bzw. im Betrieb keine Auswirkungen auf eine gewünschte Flugbahn zeigen soll.

Aufgabe der vorliegenden Erfindung ist es, einen Zünder bzw. eine Entsicherungseinheit oder einen elektrischen Generator hinsichtlich des Windrades zu verbessern.

Die Aufgabe wird durch ein Windrad gemäß den Merkmalen von Patentanspruch 1 gelöst. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Das Windrad ist ein Windrad für einen Antrieb einer Entsicherungseinheit eines Zünders für Munition oder für einen Antrieb eines elektrischen Generators eines Zünders für Munition. Das Windrad weist einen Grundkörper auf. Der Grundkörper weist ein Zentralteil auf. Das Zentralteil erstreckt sich ausgehend von einer Rotationsachse radial nach außen. Der Grundkörper weist mindestens einen Flügel auf, der bezüglich der Rotationsachse radial außen am Zentralteil angebracht ist. Das Windrad enthält ein Leitmittel. Das Leitmittel ist dazu ausgebildet, Im Betrieb anströmende Luft in Richtung der Flügel zu leiten. Das Leitmittel ist fest mit dem Grundkörper verbunden. Der Betrieb des Windrades ist derjenige Zustand, wenn die Munition abgefeuert ist und durch die Luft fliegt. Im Betrieb, also im Flug, anströmende Luft treibt dann das Windrad an, welches wiederum die Entsicherungseinheit betätigt oder den elektrischen Generator antreibt und hierdurch bspw. ein erforderliches elektronisches Signal für eine Entsicherung einer Entsicherungseinheit eines Zünders bereitstellt. Im Betrieb dreht sich das gesamte Windrad um die Rotationsachse. Der oder die Flügel können auch Schaufeln oder Schaufelelemente genannt werden.

Die Erfindung beruht auf folgenden Überlegungen und Erkenntnissen:
Zur Vermeidung aerodynamischer Verluste werden häufig innenliegende Windräder benutzt. Das Windrad aus der GB 191104064 A liegt innerhalb eines Gehäuses. Im Projektilkopf sind mehrere Kanäle vorgesehen, durch welche Luft während des Fluges eintreten kann. Die zeichnerische Darstellung offenbart sehr feine dünne Strömungskanäle, die an der Vorderseite des Zünders beginnen und seitlich enden. Diese vorne angebrachten Kanäle sind empfindlich gegenüber Verschmutzungen und können sich leicht beim Umgang mit der Munition im Feld verstopfen bzw. sind sehr anfällig gegenüber mechanischen Einflüssen.

Die ähnliche Variante aus der DE 1 908 519 A gewährleistet eine verbesserte Luftzufuhr durch eine Vielzahl von Eintrittslöchern. Diese erzeugen allerdings erhebliche Windverwirbelungen und somit aerodynamische Verluste.

Die Vorrichtung aus der DE 31 26 288 A1 weist eine optimierte Strömung auf. Allerdings bleibt bei diesem - auch innenliegenden - Windrad das Problem der Abdeckung bzw. des gegen Verschmutzung offenen Zünders bestehen.

Ein anderes Problem bei Windrädern ist die Abdeckung bzw. Verschmutzung des Zünders. Dieses Problem wird von Zündern vermieden, die ein direktes, offenes Windrad auf der Zünderspitze montiert haben. Auch hier werden jedoch Verwirbelungen und aerodynamische Verluste erzeugt, die teilweise größer sind als bei innenliegenden Konstruktionen. Versuche, Abhilfe durch weitere Maßnahmen zu schaffen, sind Strömungsbleche oder Leitbleche. Ein derartiges Leitblech weist jedoch in der Regel eine hohe Fragilität auf und kann im groben Alltag im Feld schnell beschädigt werden.

Eine Grundidee der Erfindung besteht daher darin, eine Lösung anzustreben, die eine robustere Ausführung ermöglicht, Die Erfindung beruht auch auf der Erkenntnis, dass Leitringe für Luft an Turbinen bekannt sind. Die Leitringe befinden sich bei Turbinen jedoch fest fixiert außen am Gehäuse der Turbine und leiten die Strömung optimiert auf die Turbinenschaufel. Üblicherweise besitzt ein Windrad auf einem Zünder bezüglich dessen Rotationsachse radial außen angebrachte Flügelflächen, an denen die Luftströmung wirkt.

Gemäß der Erfindung wird ein auf dem Windrad selbst befindliches Leitmittel, beispielsweise in Form eines Leitrings, oder ein entsprechendes Führungsmittel vorgeschlagen, durch welches die Luft in Richtung der Flügelflächen geleitet bzw. konzentriert werden kann. Dadurch wird die Wirkung der Flügelflächen verstärkt bzw. ein unkontrolliertes Vorbeiströmen ohne Wirkung bzw. mit verminderter Wirkung bzw. eine negative Beeinflussung verringert bzw. beseitigt. Das Leitmittel bzw. dessen Leitflächen sind damit Teile des Windrades selbst. Sie drehen mit dem Windrad mit und sind im Gegensatz zu den genannten üblichen Konstruktionen nicht feststehend. Sie benötigen somit keine speziellen Mittel zur Halterung oder zur Positionierung relativ zum Windrad, welche insbesondere bei nicht sauberer Ausrichtung / Montage die Flugbahn eines Zünders bzw. einer Munition negativ beeinflussen können.

Das entstehende Windraddesign besitzt einen minimalen aerodynamischen Widerstand, der zur minimalsten Beeinträchtigung bis hin zur Vermeidung der Flugbahnbeeinflussung beiträgt. Darüber hinaus ist das Windrad zum Inneren der Kopfstruktur, z. B. zum Zünder, hin abdichtbar, was eine hohe Sicherheit bezüglich Verschmutzung und aller Umwelteinflüsse wie z. B. Feuchtigkeit darstellt. Hierzu wird insbesondere eine Dichtung, z. B, Flach-, Rund- oder Profildichtung zwischen dem Windrad und dem Zündergehäuseteil bzw. Zündergehäuse vorgesehen. Sogar ein hohes Maß an Stabilität bezüglich Zerstörung kann durch die Erfindung gewährleistet werden, speziell im Vergleich zu fragilen, feststehenden Leitwerkssystemen. Darüber hinaus ist dieses Design einfach und wirtschaftlich zu fertigen.

Mit diesen Maßnahmen ist bei Kopfstrukturen, z. B. Zündern, die Elimination eines Sicherungsstiftes bzw. einer zusätzlichen Schutzkappe für die Kopfstruktur realisierbar. Dieses neue Design ermöglicht eine variable Anpassung an die Anforderungen von unterschiedlichen Projektilen, speziell Geschossen an die vorgegebene Ballistik. Das erfindungsgemäße Windrad zeichnet sich durch die neue Ausfertigungsart, die Anordnung der Schaufeln, eine wirtschaftliche Fertigung des Windrades zusammen mit dem daran fest integrierten Leitring bzw, der Mittel zur optimalen Strömungsführung entlang des Kopfstrukturteils eines drallenden oder nicht drallenden Geschosses aus.

Die Erfindung zeichnet sich auch durch die Kombination von Windrad mit Leitmittel bzw. Leitring aus, der somit mit dem Windrad mitdreht und in einem Bauteil vereint werden kann, entweder beispielsweise als integraler Bestandteil des Windrades bzw. seines Grundkörpers oder durch Herstellung einer festen Verbindung mit dem Windrad, wie etwa durch eine form- oder kraftschlüssige Verbindung. Die Erfindung erlaubt eine durch das neue Design gegebene einfache, wirtschaftliche Herstellungsmethode.

Des Weiteren ist anhand dieses Designs eine mimetische Anpassung der Schaufel sowie der Leitkanäle bzw. des Leitmittels / Leitrings möglich, die während des Betriebs bzw. auch vor Inbetriebnahme, z. B. durch einen Abschuss erfolgen kann. Diese mimetische Anpassung kann basieren auf sich ändernden Umwelteinflüssen, wie z. B. Strömung, Temperaturänderung, Drehzahl, Ballistik, Zentrifugal", Zentripetalkraft bzw. erfolgen durch aktivierbare Steuerelemente bzw. Steuerimpulse. Hierzu ist in einer bevorzugten Ausführungsform der Erfindung der Grundkörper und / oder das Leitmittel zumindest teilweise aus einer Formgedächtnislegierung, auch Shape Memory Alloy genannt, gefertigt. In einer besonders bevorzugten Ausführungsform sind sowohl Grundkörper als auch Leitmittel teilweise oder vollständig aus einer Formgedächtnislegierung gefertigt, insbesondere aus der gleichen Formgedächtnislegierung, so dass sich ändernde Umwelteinflüsse gleichermaßen auf Grundkörper und Leitmittel auswirken. Bei den Formgedächtnislegierungen kann es sich beispielsweise um folgende Legierungen handeln: NiTi, CuZn, CuZnAl, CuAINi, FeNiAl. Aus Gewichtsgründen bietet sich anstelle der Verwendung von Formgedächtnislegierungen auch die Verwendung von Formgedächtnispolymeren, auch Shape Memory Polymers genannt, an.

In einer vorteilhaften Ausführungsform ist das Leitmittel ein vom Grundkörper separates Bauteil und ist mit dem Grundkörper fest verbunden. In dieser Ausführungsform werden also Grundkörper und Leitmittel zunächst zumindest vorgefertigt und erst dann verbunden. Dies vereinfacht die jeweilige einzelne Herstellungsweise für Leitmittel und Grundkörper.

In einer alternativen vorteilhaften Ausführungsform ist das Leitmittel Teil des Grundkörpers und mit dem restlichen Grundkörper zusammen als einstückiges Bauteil ausgeführt. Durch die Einstückigkeit ist das Leitmittel fest mit dem restlichen Grundkörper verbunden. Dies vereinfacht die Fertigung des gesamten Windrades, da der Schritt des Fügens des Leitmittels an den Grundkörper entfällt.

In beiden zuvor beschriebenen Varianten (separate Ausführung des Leitmittels bzw. einstückige Ausführung) können die Flügel und das Leitmittel entsprechend der Erfindung dadurch geschaffen sein, dass in den Grundkörper mindestens ein Kanal eingebracht ist. Der Kanal ist zumindest abschnittsweise vollständig vom Grundkörper umschlossen. Ein jeweiliger Wandabschnitt eines jeweiligen Kanals bildet zumindest einen Teil des Leitmittels. Ein jeweiliger in der Regel anderer Wandabschnitt des Kanals bildet zumindest einen Teil des Flügels. Hierdurch ist eine einfache Herstellung des Windrades möglich, da die Kanäle in bekannter Weise, z. B. durch Bohren, Fräsen o. ä. in den Grundkörper eingebracht werden können. Der Querschnitt der jeweiligen Kanäle kann hierbei in Strömungsrichtung der im Betrieb durchströmenden Luft insbesondere konstant, abnehmend oder zunehmend groß sein. Die Strömungsrichtung bezeichnet diejenige Richtung, in welcher im Betrieb Luft an dem Windrad vorbei oder durch dieses hindurch strömt. In diesem Zusammenhang bietet sich insbesondere die zuvor erwähnte Verwendung von Formgedächtnislegierungen für Grundkörper und/oder Leitmittel an. Denn durch sich ändernde Umwelteinflüsse, wie beispielsweise Temperaturerhöhung infolge der Luftanströmung beim Flug des Zünders, oder durch gezielte Bestromung oder magnetische Anregung des Grundkörpers und/oder des Leitmittels über eine dazu eingerichtete Steuereinrichtung des Zünders kann der Querschnitt des Kanals beeinflusst werden infolge abmessungstechnischer Änderung des aus einer Formgedächtnislegierungen bestehenden Grundkörpers und / oder Leitmittels. Somit kann nicht nur über die Anzahl der Kanäle eine Begrenzung des Luftdurchsatzes und / oder über die vorgegebenen Querschnitte von Lufteinlass und Luftauslass bzw. Strömungseinlass und Strömungsauslass des oder der Kanäle die Luftzufuhr eingestellt werden, sondern auch über das verwendete Material von Grundkörper und / oder Leitmittel. Es hat sich gezeigt, dass ein Verhältnis von Strömungsein- und Strömungsauslass von kleiner 2 besonders vorteilhaft ist, unabhängig davon, ob eine Formgedächtnislegierung zum Einsatz kommt oder nicht, da sich dabei eine Sättigung der durchströmenden Luftmenge ergibt, wodurch die Drehzahl des Windrades begrenzbar ist.

In einer bevorzugten Ausführungsform bilden Flügel und Leitmittel zusammen mindestens zwei Kanäle aus, wobei sich die Kanäle zumindest abschnittsweise, insbesondere in ihrem in Strömungsrichtung stromaufwärtigen Bereich, überlappen. Durch die jeweilige Überlappung entstehen besondere geformte Aussparungen im Windrad, welche aerodynamisch besonders günstig sein können.

Entsprechend der Erfindung bilden Flügel und Leitmittel zusammen mindestens einen Kanal, der Kanal verläuft dabei schräg, insbesondere windschief, zur Rotationsachse, wobei der Abstand des Kanals zur Rotationsachse in Strömungsrichtung stromabwärts zunimmt. Mit anderen Worten führen die Kanäle dann in Strömungsrichtung stromabwärts nach radial außen. Der Verlauf der Kanäle wird hierbei durch deren Mittellängslinie bzw. -achse charakterisiert, deren Querschnitt quer zur entsprechenden Mittellängslinie betrachtet.

In einer weiteren bevorzugten Ausführungsform bilden Flügel und Leitmittel zusammen mindestens einen Kanal, wobei der Kanal einen runden, insbesondere ovalen oder kreisförmigen, oder viereckigen Querschnitt aufweist. Derartige Querschnittsformen sind besonders einfach z. B. in Form von Bohren oder Fräsen in das Windrad einbringbar.

In einer bevorzugten Ausführungsform weist eine in Strömungsrichtung stromaufwärtige Stirnseite des Windrades im Bereich des Leitmittels eine Randfläche auf, die in Umfangsrichtung um die Rotationsachse durchbrechungsfrei ausgeführt ist. Die Randfläche liegt hierbei insbesondere radial außen an der Stirnseite bzw. am Windrad. Somit entsteht ein geschlossener Ring am Windrad, welcher an dieser Stelle Lufteintritt verhindert und eine besonders effektive Luftführung gewährleistet.

In einer bevorzugten Ausführungsform enthält eine in Strömungsrichtung stromaufwärtige Stirnseite des Windrades einen entgegen der Strömungsrichtung aus der restlichen Stirnseite vorspringenden ringförmigen Kragen. Insbesondere ist der Kragen radial außen an der Stirnseite angeordnet. Der Kragen umgibt dabei insbesondere alle Lufteintrittsöffnungen in die jeweiligen Kanäle des Windrades und sorgt für eine besonders gute Strömungsführung bzw. für die Ausbildung eines Luftkissens Innerhalb der vom Kragen umgebenen Fläche entgegen der Strömungsrichtung vor der Stirnfläche bzw. dem Windrad.

In einer bevorzugten Ausführungsform weist eine in Strömungsrichtung stromaufwärtige Stirnseite des Windrades eine In Strömungsrichtung konkav oder konvex geformte, radial innenliegende Zentralfläche auf. Die Zentralfläche kann hierbei entweder durchbrechungsfrei sein oder Eintrittsöffnungen in die jeweiligen Kanäle aufweisen. Durch die konkave oder konvexe Form werden bestimmte aerodynamische Eigenschaften, je nach Wunsch, realisierbar.

In einer bevorzugten Ausführungsform ist das Windrad für Mörsermunition als Munition ausgeführt, Für derartige Munition ist ein optimiertes Windraddesign besonders vorteilhaft, um deren Flugbahn möglichst nicht zu beeinflussen.

Die Aufgabe wird auch gelöst durch einen Antrieb einer Entsicherungseinheit eines Zünders für Munition, insbesondere Mörsermunition, gemäß Patentanspruch 12. Dieser weist ein erfindungsgemaßes Windrad auf.

Für den Antrieb gelten sinngemäß die gleichen Ausführungsformen und Vorteile, wie sie bereits im Zusammenhang mit dem erfindungsgemäßen Windrad erläutert wurden.

Die Aufgabe wird auch gelöst durch einen Zünder für Munition, insbesondere Mörsermunition, gemäß Anspruch 13 mit einer Entsicherungseinheit mit einem erfindungsgemäßen Antrieb.

Auch für den Zünder gelten sinngemäß die gleichen Ausführungsformen und Vorteile, wie für den erfindungsgemäßen Antrieb bzw. das Windrad.

Die Aspekte der Erfindung in ihren verschiedenen Kategorien einschließlich bevorzugter Ausführungsformen lassen sich wie folgt zusammenfassen:
Die Erfindung beschreibt ein Design eines Windrades, das zum Antrieb der Funktion eines Zünders dient, das eine spezielle Ausfertigung besitzt und damit aerodynamisch optimiert ist und einen geringstmöglichen Einfluss auf die Gesamtaerodynamik des Zünders und damit des Geschosses besitzt. Eine Ausführungsvariante ist ein Leitring als Leitmittel. Die Ausführung des Leitmittels bzw. Leitrings kann in zwei Varianten erfolgen. Zum einen kann über einer klassischen Windradkonstruktion ein Leitring außen aufgesetzt werden. Diese Variante bedarf eines erhöhten technischen Fertigungsaufwandes. Daher kann zum anderen eine Variante erstellt werden, bei der - insbesondere durch Einbringung in den Grundkörper - eine geeignete Form von Strömungskanälen appliziert wird. Diese Kanäle werden Insbesondere schräg (bzw. windschief) bezüglich der Rotationsachse des Windrades ausgeführt, z. B. in ähnlichem Winkel wie die in der klassischen Variante eingebrachten Strömungsschlitze. Durch diese Ausführung entstehen an der Windradoberseite ab einer bestimmten Kanaldicke Überlappungen der Kanäle. Diese Überlappung trägt dazu bei, dass effektiv ringartig Material des Windrades in der Höhe (an der Stirnseite stromaufwärts in Strömungsrichtung gesehen) abgetragen wird, während es außen, d. h. am äußeren Rand der Kanäle, stehen bleibt. Diese stehen bleibende Struktur bildet effektiv einen Leitring, insbesondere in Form des Kragens, mit der gleichen Funktion wie ein auf eine klassische Windradkonstruktion außen aufgesetzter Leitring. Die Kanäle können jedoch in einfacher Weise erzeugt werden.

Das Leitmittel als einzelnes Element oder gepaart mit der konvexen oder wahlweise konkaven speziell ausgeformten Planfläche des Windrads erzeugt eine Sättigung der durchströmenden Luftmenge. Diese so genannte Sättigung wird dadurch erreicht, dass die integrierten Leitmittel mit einem bestimmten öffnungs- und Anstellwinkel in Verbindung mit einem definierten Querschnitt ausgelegt sind. Das Zusammenspiel von Öffnungs- und Anstellwinkel, Querschnitt und Anzahl/Anordnung der Strömungsleitmittel definiert das Sättigungsverhalten, bzw. den Luftdurchsatz bei den unterschiedlichen ballistischen Strömungsverhalten. Zudem wird durch das Zusammenspiel von Öffnungs- und Anstellwinkel, Querschnitt und Anzahl/Anordnung der Strömungsleitmittel das daraus resultierende Torslonsmoment/Andrehmoment des Windrades bei den unterschiedlichen ballistischen Strömungsverhalten beeinflusst.

Somit kann die Drehzahl des Windrades bei der Jeweiligen Anströmungsgeschwindigkeit beeinflusst bis begrenzt werden. Des Weiteren können über die Leitmittel die ballistischen Eigenschaften des Zünders je nach Anwendungsfall beeinflusst und entsprechend der Geschossvariante angepasst werden.

Jegliche Formgebung der Planfläche mit den Integrierten/angebauten Leitmitteln ist dazu denkbar: Die vordere Spitze kann konvex, konkav oder plan, geformt als einzelnes Bauteil oder als zusammengesetzte Baugruppe ausgeführt werden, um die Leitmittel in die als Windrad bezeichnete Zünderspitze einzubringen. Das Windrad und deren Design kann in zwei Gestaltungsklassen unterteilt werden:
Eine erste Klasse ist die Ausführung als einzelnes Bauteil: Das Windrad wird aus einem oder mehreren Werkstoffen, ohne zusätzliche Fügeverfahren, einteilig hergestellt. Denkbar sind hier auch Werkstoffe, die ihre Form während ihrer bestimmten Anwendung durch elektrische, mechanische oder umweltbedingte Einflüsse verändern.

Eine zweite Klasse ist die Ausführung aus mehr als einem Bauteil, also als Baugruppe: Das Windrad wird aus mehr als einem Bauteil oder Werkstoffen hergestellt und gefügt. Denkbar sind hier auch Werkstoffe und Bauteile, die ihre Form während ihrer bestimmten Anwendung durch elektrische, mechanische oder umweltbedingte Einflüsse einzeln oder in gefügtem Zustand verändern.

Die Erfindung ist auch auf das Scharfstellen von Mörsersystemen anwendbar. Das Ziehen eines Vorsteckers soll vermieden werden. In der Regel ist auch eine Beschleunigungssicherung im Mörsersystem vorhanden, welche insbesondere erhalten bleiben kann. Die Erfindung ersetzt den Vorstecker In Form einer Fliehkraftsicherung, welche durch das Windrad angetrieben ist.

Gemäß der Erfindung erfolgt eine Sättigung der Drehzahl, weshalb die Energieabnahme aus der Luft durch das Geschoss begrenzt ist. Bei einem Energieverlust bzw. entsprechender Energieabnahme aus der Luft sinken die Reichweite des Geschosses und die Genauigkeit. Dank der erfindungsgemäßen Leitringe erfolgt kaum eine Seitenabweichung der Geschosse. Eine Sättigung der Drehzahl bewirkt, dass nicht mehr als eine maximale Luftströmung durch das Windrad hindurchgelangen kann und sich anschließend ein Luftkissen vor dem Windrad bildet. Gemäß der Erfindung erfolgt eine Effizienzsteigerung am Windrad, d. h. eine Drehzahloptimierung bei langsamer Fluggeschwindigkeit. Andererseits erfolgt eine Drehzahlbegrenzung, d. h. eine Drehzahloptimierung bei schneller Fluggeschwindigkeit.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Fig. 1: ein Ausführungsbeispiel eines Windrads als Baugruppe (zweiteilig),
- Fig. 2: das Windrad aus Fig. 1 ohne Leitmittel,
- Fig. 3: ein alternatives Windrad als einzelnes Bauteil ausgeführt (einteilig),
- Fig. 4: ein alternatives Windrad mit Kragen,
- Flg. 5: einen Schnitt durch ein alternatives Windrad mit konkaver Zentralfläche,
- Fig. 6: einen Schnitt durch ein alternatives Windrad mit konvexer Zentralfläche,
- Fig. 7: ein alternatives Windrad mit runder Form,
- Fig. 8: ein alternatives zweiteiliges Windrad ohne Leitmittel,
- Fig. 9: ein alternatives einteiliges Windrad mit drei runden Kanälen,
- Fig. 10: einen Querschnitt durch ein alternatives zweiteiliges Windrad,
- Fig. 11: einen Querschnitt durch ein Windrad mit Kanälen mit zunehmendem Querschnitt,
- Fig. 12: einen Querschnitt durch ein Windrad mit Kanälen mit abnehmendem Querschnitt,
- Fig. 13: einen Querschnitt durch ein Windrad mit Kanälen mit konstantem Querschnitt,
- Fig. 14: einen Querschnitt durch ein Zündergehäuse mit Windrad.

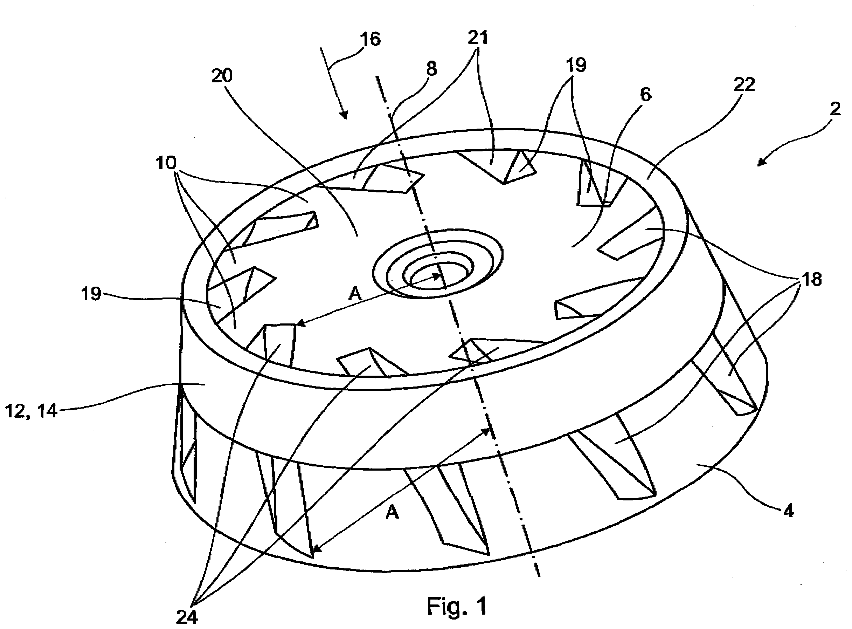

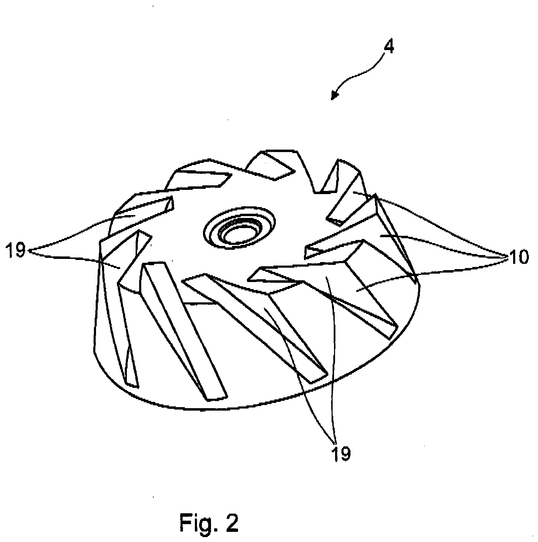

Figur 1 zeigt In perspektivischer Schrägansicht ein Windrad 2 für einen nicht dargestellten Antrieb einer Entsicherungseinheit eines Zünders für Munition. Das Windrad 2 weist einen in etwa kegelstumpfförmigen Grundkörper 4 auf, welcher wiederum ein Zentralteil 6, ebenfalls etwa in Kegelstumpfform, enthält. Das Zentralteil 6 erstreckt sich vor einer Rotationsachse 8 aus radial nach außen bis zu einer gedachten Mantelfläche, an die radial auswärts Flügel 10 anschließen. Der Grundkörper 4 enthält außerdem zehn radial außen am Zentralteil 6 angebrachte Flügel 10. Das Windrad 2 enthält außerdem ein Leitmittel 12, welches hier als separates Bauteil 14 ausgeführt ist und dabei fest mit dem Grundkörper 4 verbunden ist. Figur 1 zeigt also das Windrad 1 In Form einer Baugruppe, nämlich zweiteilig ausgeführt. Figur 2 zeigt das Windrad 2 ohne Leitmittel 12 und damit ein klassisches Windrad.

Im Betrieb des Windrads 2 strömt Luft in Strömungsrichtung 16, hier durch einen Pfeil angedeutet, auf das Windrad 2 zu und durch dieses hindurch bzw, an diesem vorbei. Durch Angriff an den Flügeln 10 dreht sich das Windrad 2 um die Rotationsachse 8.

Figur 2 zeigt den Grundkörper 4 als klassisches Bauteil bzw. klassische Windradkonstruktion, auf die das Leitmittel 12, hier als Leitring, später aufgesetzt und verbunden ist, um das Windrad 2 aus Figur 1 zu bilden.

In Figur 1 bilden Leitmittel 12 und Flügel 10 insgesamt zehn Kanäle 18 aus, die schräg bzw. windschief zur Rotationsachse 8 verlaufen. In Strömungsrichtung 16 stromabwärts gesehen nimmt der Abstand A der Kanäle 18 zur Rotationsachse 8 zu. Der Abstand A ist in Figur 1 symbolisch jeweils in Strömungsrichtung 16 gesehen für ein oberes und unteres Ende der Kanäle 18 dargestellt. In Figur 1 weisen die Kanäle 18 jeweils einen viereckigen Querschnitt Q auf. Der Querschnitt wird jeweils quer zur Mittellängslinie 32 der Kanäle 18 angegeben.

Eine stromaufwärtige Stirnseite 20 weist im Bereich des Leitmittels 12 eine hier radial außen liegende Randfläche 22 auf, die bezogen auf die Rotationsachse 8 in Umfangsrichtung durchbrechungsfrei ausgeführt ist. In Figur 1 ist die Stirnseite 20 als ebene Fläche ausgebildet, die von jeweiligen Eintrittsöffnungen 24 der Kanäle 18 durchbrochen ist. Das Windrad 2 gemäß Figur 1 ermöglicht die Bildung eines Luftkissens aufgrund der umlaufenden Randfläche 22, wobei die Ausbildung eines Luftkissens bei der klassischen Variante gemäß Figur 2 (alleine, ohne Leitmittel 12) nicht möglich wäre.

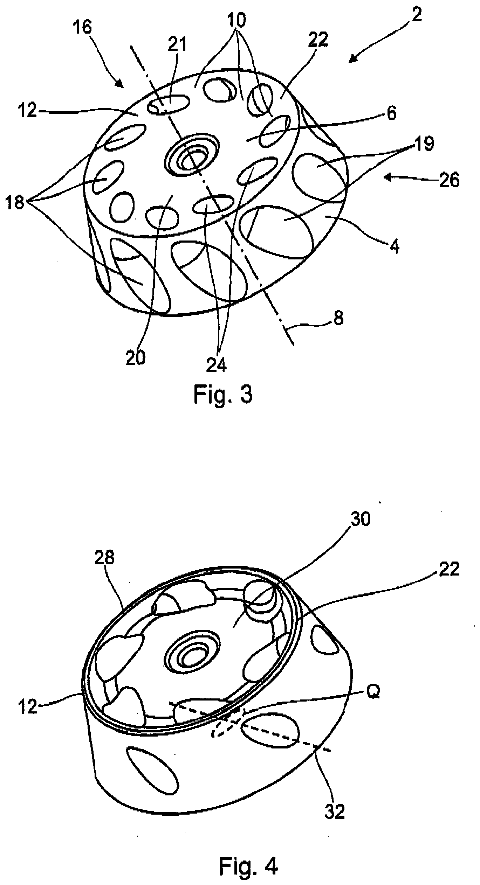

Figur 3 zeigt eine alternative Ausführungsform eines Windrads 2. Hier enthält der Grundkörper 4 neben dem Zentralteil 6 und den Flügeln 10 auch das Leitmittel 12, welches hier Teil des Grundkörpers 4 ist. Der gesamte Grundkörper 4 ist demnach als einstückiges Bauteil 26 ausgeführt. In diesem Fall sind die Flügel 10 und das Leitmittel 12 dadurch geschaffen, dass die Kanäle 18 in den bereits bestehenden Grundkörper 4 eingebracht sind. Ein jeweiliger Wandabschnitt 19 eines jeden Kanals 18 bildet einen Teil des jeweiligen benachbarten Flügels 10. Ein Wandabschnitt 21 bildet einen Teil des an der jeweiligen Stelle vorhandenen Leitmittels 12. Im Beispiel gemäß Figur 3 weisen die Kanäle 18 außerdem jeweils einen runden Querschnitt auf. Auch hier weist die Stirnseite 20 wieder im Bereich des Leitmittels 12 eine radial außen liegende Randfläche 22 auf, die in Umfangsrichtung um die Rotationsachse 8 durchbrechungsfrei ausgeführt ist.

Die als einstückiges Bauteil 26 ausgeführten Windräder 2 in den Figuren zeigen jeweils integrierte Leitmittel 12 und Flügel 10 als Antriebselemente,

Figur 4 zeigt eine weitere alternative Ausführungsform eines Windrades 2, das ebenfalls als einstückiges Bauteil 26 gestaltet ist. Hier weist die in Strömungsrichtung 16 stromaufwärtig liegende Stirnseite 20 einen aus der restlichen Stirnseite 20 vorspringenden, ringförmigen Kragen 28 auf, der hier zumindest einen Teil des Leitmittels 12 bildet und die bereits erläuterte Randfläche 22 aufweist. Eine radial innen liegende Zentralfläche 30, die einen bis an die Eintrittsöffnungen 24 reichenden radial innen liegenden Bereich der Stirnseite 20 darstellt, ist in der vorliegenden Ausführungsform eben ausgeführt.

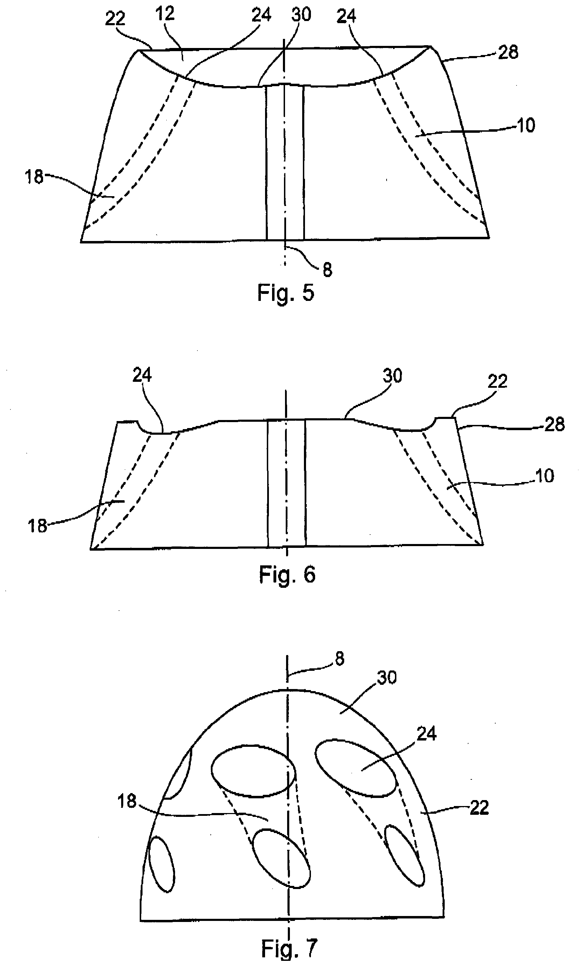

Figur 5 zeigt einen Schnitt durch eine alternative Ausführungsform eines Windrades 4, welche ebenfalls einen umlaufenden Kragen 28 mit Randfläche 22 aufweist. Bei dieser ist jedoch die bis an die Eintrittsöffnungen 24 ragende Zentralfläche 30 konkav geformt. Figur 5 verdeutlicht auch nochmals den Zentralteil 6, welcher sich ausgehend von der Rotationsachse 8 bis zu den Kanälen 18 erstreckt, sowie die sich an den Zentralteil 6 anschließenden Flügel 10, welche zwischen Zentralteil 6 und Leitmittel 12 gebildet sind.

Figur 6 zeigt ein entsprechendes Beispiel mit einer konvex geformten Zentralfläche 30, welches ansonsten mit Figur 4 vergleichbar ist.

Figur 7 zeigt in Seitenansicht ein alternatives Windrad, das kappenförmig rundlich ausgebildet ist. Dieses weist ebenfalls eine konvexe Zentralfläche 30 auf. Hier ist an der Stirnseite 20 jedoch kein Kragen vorgesehen.

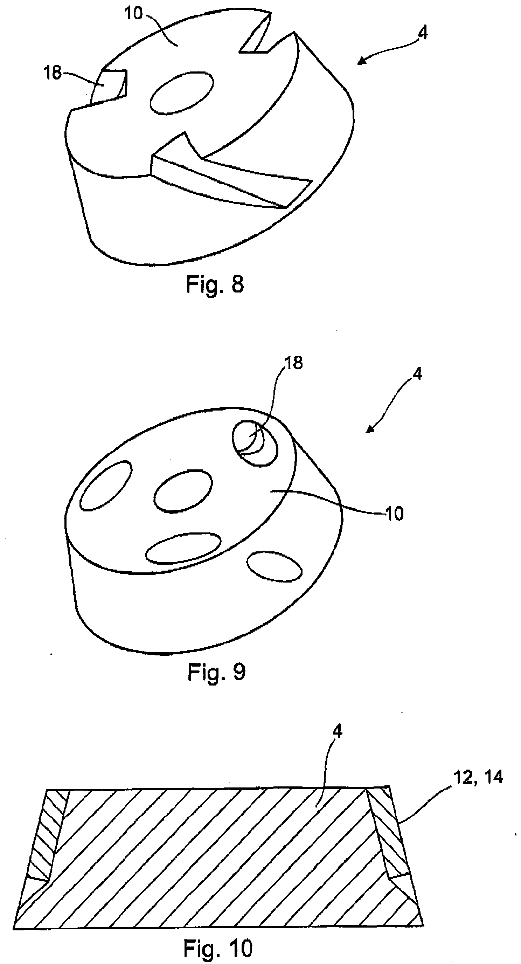

Figur 8 zeigt eine alternative Ausführungsform eines Grundkörpers 4, welcher entsprechend zu Figur 2 ohne Leitmittel 12 dargestellt ist und mit der Ausführungsform gemäß Fig. 2 vergleichbar Ist, jedoch weniger Kanäle 18 und damit weniger Flügel 10 aufweist.

Figur 9 zeigt ein alternatives Windrad 2 gemäß der Erfindung, welches wieder als einstückiges Bauteil 26 ausgeführt ist und ansonsten mit der Ausführungsform gemäß Figur 3 vergleichbar ist, jedoch weniger Kanäle 18 und damit weniger Flügel 10 aufweist.

Figur 10 zeigt einen Schnitt durch ein Windrad 4 entsprechend Figur 1, welches ein Leitmittel 12 als separates Bauteil 14 aufweist.

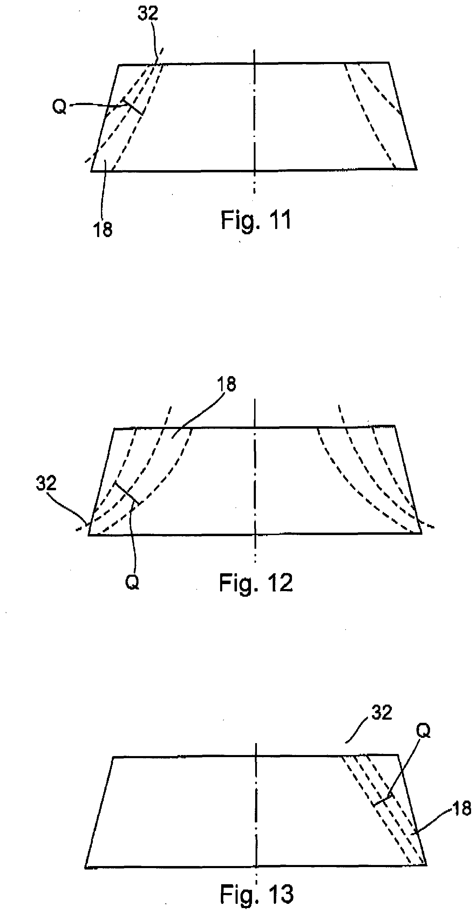

Die Figuren 11-13 zeigen jeweilige Windräder 2 etwa gemäß Fig. 3 im Schnitt, jedoch mit unterschiedlich ausgeführten Kanälen 18, die sich nämlich in den Verläufen ihrer Querschnitte Q entlang der jeweiligen Mittellängslinie 32 der Kanäle unterscheiden. In Figur 11 nimmt der Querschnitt Q der Kanäle 18 in Strömungsrichtung 16 zu, in Figur 12 nimmt der Querschnitt Q ab und in Figur 13 ist der Querschnitt Q gleichbleibend ausgeführt. Der Querschnitt Q verläuft jeweils quer zur entsprechenden Längsrichtung 32 der jeweiligen Kanäle 18.

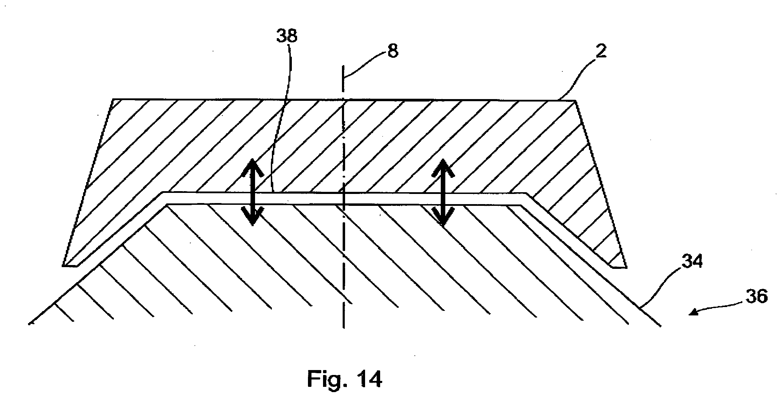

Figur 14 zeigt ein Zündergehäuse 34 eines Zünders 36, auf welchem ein nur symbolisch dargestelltes Windrad 2 gemäß der Erfindung montiert ist. In einem vorhandenen Spalt 38 zwischen Zündergehäuse 34 und Windrad 2 Ist eine nicht dargestellte Dichtung, Insbesondere Flach-, Rund- oder Profildichtung einlegbar bzw. integriert, welche das Windrad 2 als Dichtelement zu dem Zündergehäuseteil bzw. Zündergehäuse 34 ertüchtigt.

### Bezugszeichenliste

- 2: Windrad
- 4: Grundkörper
- 6: Zentralteil
- 8: Rotationsachse
- 10: Flügel
- 12: Leitmittel
- 14: separates Bauteil
- 16: Strömungsrichtung
- 18: Kanal
- 19: Wandabschnitt
- 20: Stirnseite
- 21: Wandabschnitt
- 22: Randfläche
- 24: Eintrittsöffnung
- 26: einstückiges Bauteil
- 28: Kragen
- 30: Zentralfläche
- 32: Mittellängslinie
- 34: Zündergehäuse
- 36: Zünder
- 38: Spalt

- A: Abstand
- Q: Querschnitt

## Patentansprüche

1. Windrad (2) für einen Antrieb einer Entsicherungseinheit eines Zünders (36) für Munition oder für einen Antrieb eines elektrischen Generators eines Zünders für Munition, mit einem Grundkörper (4), der ein Zentralteil (6), das sich ausgehend von einer Rotationsachse (8) radial nach außen erstreckt, und mindestens einen radial außen am Zentralteil (6) angebrachten Flügel (10) enthält, wobei das Windrad (2) ein Leitmittel (12) enthält, das dazu ausgebildet ist, im Betrieb anströmende Luft in Richtung der Flügel (10) zu leiten, und wobei das Leitmittel (12) fest mit dem Grundkörper (4) verbunden ist,
**dadurch gekennzeichnet,**
**dass** Flügel (10) und Leitmittel (12) zusammen mindestens einen Kanal (18) ausbilden, der schräg zur Rotationsachse (8) verläuft und dessen Abstand (A) zur Rotationsachse (8) in Strömungsrichtung (16) stromabwärts zunimmt.

2. Windrad (2) nach Anspruch 1,
**dadurch gekennzeichnet,**
**dass** das Leitmittel (12) ein vom Grundkörper (4) separates Bauteil (14) ist und mit dem Grundkörper (4) fest verbunden ist.

3. Windrad (2) nach Anspruch 1,
**dadurch gekennzeichnet,**
**dass** das Leitmittel (12) Teil des Grundkörpers (4) ist und mit restlichem Grundkörper (4) als einstückiges Bauteil (26) ausgeführt ist.

4. Windrad (2) nach einem der vorhergehenden Ansprüche,
**dadurch gekennzeichnet,**
**dass** die Flügel (10) und das Leitmittel (12) dadurch geschaffen sind, dass in den Grundkörper (4) mindestens ein zumindest abschnittsweise vollständig umschlossener Kanal (18) eingebracht ist, wobei ein jeweiliger Wandabschnitt (21) eines jeweiligen Kanals (18) zumindest einen Teil des Leitmittels (12) und ein jeweiliger Wandabschnitt (19) des Kanals (18) zumindest einen Teil des Flügels (10) bildet.

5. Windrad (2) nach einem der vorhergehenden Ansprüche,
**dadurch gekennzeichnet,**
**dass** Flügel (10) und Leitmittel (12) zusammen mindestens zwei Kanäle (18) ausbilden, die sich zumindest abschnittsweise, insbesondere in ihrem in Strömungsrichtung (16) stromaufwärtigen Bereich, überlappen.

6. Windrad (2) nach Anspruch 1,
**dadurch gekennzeichnet,**
**dass** der zumindest eine durch Flügel (10) und Leitmittel (12) zusammen ausgebildete Kanal (18) windschief zur Rotationsachse (8) verläuft.

7. Windrad (2) nach einem der vorhergehenden Ansprüche,
**dadurch gekennzeichnet,**
**dass** Flügel (10) und Leitmittel (12) zusammen mindestens einen Kanal (18) ausbilden, der einen runden, insbesondere ovalen oder kreisförmigen, oder viereckigen Querschnitt (Q) aufweist.

8. Windrad (2) nach einem der vorhergehenden Ansprüche,
**dadurch gekennzeichnet,**
**dass** eine in Strömungsrichtung (16) stromaufwärtige Stirnseite (20) des Windrades (2) im Bereich des Leitmittels (12) eine, insbesondere radial außen liegende, Randfläche (22) aufweist, die in Umfangsrichtung um die Rotationsachse (8) durchbrechungsfrei ausgeführt ist.

9. Windrad (2) nach einem der vorhergehenden Ansprüche,
**dadurch gekennzeichnet,**
**dass** eine in Strömungsrichtung (16) stromaufwärtige Stirnseite (20) des Windrades (2) einen entgegen der Strömungsrichtung (16) aus der restlichen Stirnseite (20) vorspringenden ringförmiger Kragen (28) enthält, der insbesondere radial außen an der Stirnseite (20) angeordnet ist.

10. Windrad (2) nach einem der vorhergehenden Ansprüche,
**dadurch gekennzeichnet,**
**dass** eine in Strömungsrichtung (16) stromaufwärtige Stirnseite (20) des Windrades (2) eine in Strömungsrichtung (16) konkav oder konvex geformte, radial innenliegende Zentralfläche (30) aufweist.

11. Windrad (2) nach einem der vorhergehende Ansprüche,
**dadurch gekennzeichnet,**
**dass** der Grundkörper (4) und / oder das Leitmittel (12) zumindest teilweise aus einer Formgedächtnislegierung gefertigt sind.

12. Windrad (2) nach einem der vorhergehenden Ansprüche,
**dadurch gekennzeichnet,**
**dass** dieses für Mörsermunition als Munition ausgeführt ist.

13. Antrieb einer Entsicherungseinheit eines Zünders (36) für Munition, insbesondere Mörsermunition,
**dadurch gekennzeichnet,**
**dass** dieser ein Windrad (2) nach einem der Ansprüche 1 bis 12 enthält.

14. Zünder (36) für Munition, insbesondere Mörsermunition,
**dadurch gekennzeichnet,**
**dass** dieser eine Entsicherungseinheit mit einem Antrieb nach Anspruch 13 enthält.

## Claims

1. Wind wheel (2) for a drive of an arming unit of a fuse (36) for munition or for a drive of an electric generator of a fuse for munition, having a main body (4) which comprises a central part (6) which extends radially to the outside, starting from a rotational axis (8), and at least one blade (10) which is attached to the central part (6) radially on the outside, the wind wheel (2) comprising a guide means (12) which is configured to guide incident air during operation in the direction of the blades (10), and the guide means (12) being connected fixedly to the main body (4), **characterized in that** the blades (10) and the guide means (12) together configure at least one channel (18) which runs obliquely with respect to the rotational axis (8) and the spacing (A) of which from the rotational axis (8) increases downstream in the flow direction (16).

2. Wind wheel (2) according to Claim 1, **characterized in that** the guide means (12) is a component (14) which is separate from the main body (4), and is connected fixedly to the main body (4).

3. Wind wheel (2) according to Claim 1, **characterized in that** the guide means (12) is part of the main body (4) and is configured as a single-piece component (26) with the remaining main body (4).

4. Wind wheel (2) according to one of the preceding claims, **characterized in that** the blades (10) and the guide means (12) are produced by virtue of the fact that at least one channel (18) which is enclosed completely at least in sections is made in the main body (4), a respective wall section (21) of a respective channel (18) forming at least one part of the guide means (12), and a respective wall section (19) of the channel (18) forming at least one part of the blade (10).

5. Wind wheel (2) according to one of the preceding claims, **characterized in that** the blades (10) and the guide means (12) together configure at least two channels (18) which overlap at least in sections, in particular in their upstream region in the flow direction (16).

6. Wind wheel (2) according to Claim 1, **characterized in that** the at least one channel (18) which is configured by way of the blades (10) and the guide means (12) together runs in a skewed manner with respect to the rotational axis (8).

7. Wind wheel (2) according to one of the preceding claims, **characterized in that** the blades (10) and the guide means (12) together configure at least one channel (18) which has a round, in particular oval or circular, or square cross section (Q).

8. Wind wheel (2) according to one of the preceding claims, **characterized in that** an upstream (in the flow direction (16)) end side (20) of the wind wheel (2) has, in the region of the guide means (12), an edge face (22) which lies, in particular, radially on the outside and is configured without apertures in the circumferential direction around the rotational axis (8).

9. Wind wheel (2) according to one of the preceding claims, **characterized in that** an upstream (in the flow direction (16)) end side (20) of the wind wheel (2) comprises an annular collar (28) which projects from the remaining end side (20) counter to the flow direction (16) and is arranged, in particular, radially on the outside on the end side (20).

10. Wind wheel (2) according to one of the preceding claims, **characterized in that** an upstream (in the flow direction (16)) end side (20) of the wind wheel (2) has a radially inner central face (30) which is shaped concavely or convexly in the flow direction (16).

11. Wind wheel (2) according to one of the preceding claims, **characterized in that** the main body (4) and/or the guide means (12) are/is manufactured at least partially from a shape-memory alloy.

12. Wind wheel (2) according to one of the preceding claims, **characterized in that** it is configured for mortar munition as munition.

13. Drive of an arming unit of a fuse (36) for munition, in particular mortar munition, **characterized in that** it comprises a wind wheel (2) according to one of Claims 1 to 12.

14. Fuse (36) for munition, in particular mortar munition, **characterized in that** it comprises an arming unit having a drive according to Claim 13.

## Revendications

1. Roue éolienne (2) pour un entraînement d'une unité de déblocage d'une fusée (36) pour une munition ou pour un entraînement d'un générateur électrique d'une fusée pour une munition, avec un corps de base (4), qui contient une partie centrale (6), qui s'étend radialement vers l'extérieur à partir d'un axe de rotation (8), et au moins une ailette (10) montée radialement à l'extérieur sur la partie centrale (6), dans laquelle la roue éolienne (2) contient un moyen de guidage (12), qui est configuré pour guider en fonctionnement l'air entrant en direction des ailettes (10), et dans laquelle le moyen de guidage (12) est assemblé solidairement au corps de base (4), **caractérisée en ce que** les ailettes (10) et le moyen de guidage (12) forment ensemble au moins un canal (18), qui s'étend en oblique par rapport à l'axe de rotation (8) et dont la distance (A) à l'axe de rotation (8) augmente vers l'aval dans la direction d'écoulement (16) .

2. Roue éolienne (2) selon la revendication 1, **caractérisée en ce que** le moyen de guidage (12) est un composant (14) séparé du corps de base (4) et est assemblé solidairement au corps de base (4).

3. Roue éolienne (2) selon la revendication 1, **caractérisée en ce que** le moyen de guidage (12) est une partie du corps de base (4) et est réalisé sous la forme d'un composant en une seule pièce (26) avec le reste du corps de base (4).

4. Roue éolienne (2) selon l'une quelconque des revendications précédentes, **caractérisée en ce que** les ailettes (10) et le moyen de guidage (12) sont façonnés par le fait qu'au moins un canal au moins en partie entièrement fermé (18) est pratiqué dans le corps de base (4), dans laquelle une partie de paroi respective (21) d'un canal respectif (18) forme au moins une partie du moyen de guidage (12) et une partie de paroi respective (19) du canal (18) forme au moins une partie de l'ailette (10).

5. Roue éolienne (2) selon l'une quelconque des revendications précédentes, **caractérisée en ce que** les ailettes (10) et le moyen de guidage (12) forment ensemble au moins deux canaux (18), qui se chevauchent au moins partiellement, en particulier dans leur région située en amont dans la direction d'écoulement (16).

6. Roue éolienne (2) selon la revendication 1, **caractérisée en ce que** ledit au moins un canal (18) formé ensemble par une ailette (10) et le moyen de guidage (12) est orienté en oblique par rapport à l'axe de rotation (8).

7. Roue éolienne (2) selon l'une quelconque des revendications précédentes, **caractérisée en ce qu'**une ailette (10) et le moyen de guidage (12) forment ensemble au moins un canal (18), qui présente une section transversale (Q) ronde, en particulier ovale ou circulaire, ou quadrangulaire.

8. Roue éolienne (2) selon l'une quelconque des revendications précédentes, **caractérisée en ce qu'**un côté frontal (20) de la roue éolienne (2) situé en amont dans la direction d'écoulement (16) présente dans la région du moyen de guidage (12) une face de bord (22), située en particulier radialement à l'extérieur, qui est réalisée sans interruption dans la direction périphérique autour de l'axe de rotation (8).

9. Roue éolienne (2) selon l'une quelconque des revendications précédentes, **caractérisée en ce qu'**un côté frontal (20) de la roue éolienne (2) situé en amont dans la direction d'écoulement (16) contient un rebord annulaire (28) saillant hors du reste du côté frontal (20) contre la direction d'écoulement (16), qui est disposé en particulier radialement à l'extérieur sur le côté frontal (20).

10. Roue éolienne (2) selon l'une quelconque des revendications précédentes, **caractérisée en ce qu'**un côté frontal (20) de la roue éolienne (2) situé en amont dans la direction d'écoulement (16) présente une face centrale (30) située radialement à l'intérieur, présentant une forme concave ou convexe dans la direction d'écoulement (16).

11. Roue éolienne (2) selon l'une quelconque des revendications précédentes, **caractérisée en ce que** le corps de base (4) et/ou le moyen de guidage (12) sont fabriqués au moins en partie en un alliage à mémoire de forme.

12. Roue éolienne (2) selon l'une quelconque des revendications précédentes, **caractérisée en ce qu'**elle est conçue comme une munition pour une munition pour mortier.

13. Entraînement d'une unité de déblocage d'une fusée (36) pour une munition, en particulier une munition pour mortier, **caractérisé en ce que** celui-ci contient une roue éolienne (2) selon l'une quelconque des revendications 1 à 12.

14. Fusée (36) pour une munition, en particulier une munition pour mortier, **caractérisée en ce qu'**elle contient une unité de déblocage avec un entraînement selon la revendication 13.
